# EUROPEAN PATENT SPECIFICATION

(11) **EP 4 083 534 B1**
(45) Date of publication and mention of the grant of the patent: **19.08.2026**
(21) Application number: 22164243.2
(22) Date of filing: 24.03.2022
(51) Int. Cl.: F24S 10/20, F24S 10/25, F24S 10/30, F24S 10/70, F24S 50/40, F24S 40/55, F24S 20/00

(54) **HEAT EXCHANGER FOR SOLAR CONVERTERS AND METHOD FOR CONTROLLING THE TEMPERATURE OF SUCH HEAT EXCHANGER**
WÄRMETAUSCHER FÜR SOLARWANDLER UND VERFAHREN ZUR TEMPERATURREGELUNG EINES SOLCHEN WÄRMETAUSCHERS
ÉCHANGEUR DE CHALEUR POUR CONVERTISSEURS SOLAIRES ET PROCÉDÉ DE CONTRÔLE DE LA TEMPÉRATURE D'UN TEL ÉCHANGEUR DE CHALEUR

(30) Priority: 28.04.2021 PL 43773821
(43) Date of publication of application: 02.11.2022
(73) Proprietor: SIEC BADAWCZA LUKASIEWICZ - INSTYTUT MIKROELEKTRONIKI I FOTONIKI, 02-668 Warszawa (PL); Kulewski, Ryszard, 01-108 Warszawa (PL)
(72) Inventor: Kulewski, Ryszard, 01-108 Warszawa (PL)
(74) Representative: AOMB Polska Sp. z.o.o.

(56) References cited:
- EP-A2- 2 182 302
- DE-A1- 102006 021 119
- DE-A1- 102011 053 526
- DE-A1- 2 826 937
- JP-A- 2001 033 050
- US-A- 4 102 325
- US-A1- 2012 291 770

## Description

The subject matter of the invention is a heat exchanger for solar converters, especially for flat solar collectors, hybrid PVT panels and under-roof solar collectors, and a method for controlling the temperature of such a heat exchanger.

Converters that convert solar energy into electrical energy and/or thermal energy - popularly known as renewable energy sources - such as PV photovoltaic panels, hybrid PVT photovoltaic panels with heat recovery, solar collectors and solar under-roof collectors are widely known and used. The thermal energy obtained from such renewable energy sources is generally used to charge domestic hot water storage tanks and sometimes also to support central heating installations with thermal energy. By recovering the thermal energy from the PV component, the PV photovoltaic panel is cooled, thereby increasing electrical efficiency and extending the life of the entire structure. The main purpose and basis for the usefulness of the various types of solar collectors is the possibility to obtain a thermal energy carrier with a temperature higher than 40 °C (heating of water in a domestic hot water storage tank). This limits the applicability of such heat sources to six or seven months of the summer period. However, during periods of high exposure to sunlight, the temperatures achieved sometimes far exceed the upper limit for domestic hot water temperature (55 °C), contributing to the degradation of the installation and the solar fluid. When the energy is not being absorbed by the DHW storage tank (because the DHW storage tank is generally already charged), the energy accumulates in the solar installation and the temperature rises rapidly, which is known as stagnation, with the risk of the solar fluid even boiling and exploding. Under such conditions, in the case of hybrid PVT photovoltaic panels with heat recovery, the cooling function of the PV component of the PVT panel with heated solar fluid decreases significantly during the highest sunshine values and as a result of the temperature increase in the domestic hot water storage tank and thus the decrease in the temperature difference ΔT between them. The PV component then acquires extremely high temperatures and, as the temperature increases, the negative effect of the temperature coefficient on the electrical efficiency of the PV component increases significantly. This is especially the case for silicon and perovskite photovoltaic cells. The temperature coefficient of silicon photovoltaic cells reaches 0.45% decrease in electrical efficiency for every 1°C increase in their temperature, which limits the potentially highest electrical efficiency during this period. On the other hand, heat energy that is not collected by the storage tank and is not needed is not only lost, but above all is harmful and dangerous. Even during periods when the solar fluid does not reach a temperature which ensures that the lower limit of the domestic hot water temperature is reached, its energy is mostly useless, even though the amount of this energy and its economic value per year is greater than the energy value which is considered useful in the domestic hot water temperature range and higher than the economic value of the electrical energy generated. The unused sum of the solar fluid energy with temperatures above the upper domestic hot water temperature limit and below the lower domestic hot water temperature limit means that the potentially available solar energy, used for heat production, is then used to a minimum degree. That is, it is only used for domestic hot water heating as there is usually no justification for installing more solar collectors and other renewable energy sources that produce heat energy than the minimum necessary to cover domestic hot water needs. For example, for a family of four, living in a detached house of approx. 120 m², only 0.6 of an average solar collector per house occupant is sufficient in the summertime. Using more solar collectors and producing more thermal energy despite this potential is not advisable and is even harmful. This situation causes a decrease in demand in the solar renewable energy market, especially for hybrid PVT solar panels with heat recovery.

Solutions are known that allow the hydraulic installation of T-components of hybrid PVT solar panels to be incorporated as heat sources directly into the heat pump's lower source circuits. These solutions make it possible to obtain temperatures of the solar fluid of the T-component of the PVT panel even below 0 °C, which increases the temperature difference ΔT between the temperature of the T-component of the PVT panel as an energy source and the temperature of the energy receiver (lower source of the heat pump). Such a solution causes harmful deposition of frost or ice on the installation and does not ensure stable operation of the heat pump. This is due to the insufficient thermal capacity of the installation itself, the instability of the heat pump operation and the randomness of the solar energy supply. Maintaining the solar fluid temperature in a renewable energy installation at ~ 0 °C, under conditions of variable solar supply, wind gusts, etc., requires the use of a heat pump that consumes a relatively large amount of energy to drive it, and the use of complex systems for controlling the heat pump's lower source temperature, which complicates and makes the installation more expensive. During the day, when the solar supply is high, this requires the heat pump to operate in a start-stop regime, which is very disadvantageous for the heat pump and energetically inefficient. This solution does not guarantee reaching the limit of economic profitability, resulting from the ratio of the useful energy value, obtained in the upper source of the heat pump, to the value of energy consumed to drive the heat pump. In the commonly known structures of flat solar collectors, hybrid PVT panels and under-roof solar collectors, piping integrated with an absorption plate, a photovoltaic plate or a metal sheet (flat, trapezoidal, shingled, etc. of roof sheathing) which are types of heat exchanger is used to collect thermal energy from the absorption plate heated by solar radiation. In known solutions, meander piping (coil) or harp piping (parallel pipes between the inlet collector and the outlet collector) are generally used. "Bionic" heat exchangers are also known which are externally a plate containing a structure of miniature channels in its volume. In solutions using meander piping, with a single flow of solar fluid through a hydraulic heat recovery installation, a maximum achievable temperature of the solar fluid at the output of such a heat exchanger is achieved with incomplete use of the energy of the heated absorption plate (and in the case of PVT panels also with not very efficient cooling of the photovoltaic plate). However, with the same pipe diameters of the (meander and harp) heat exchangers, the harp connection achieves the highest possible energy efficiency (and in the case of PVT, also the maximally efficient and uniform cooling of the entire photovoltaic plate) at a relatively low temperature of the solar fluid stream at the collector output. The known solutions do not provide the possibility to flexibly adapt the installation to the occurring (randomly varying) environmental conditions, such as the degree of exposure to sunlight, air temperature, variable shading (relative movement of the sun in relation to solar panels and collectors or movement of tree leaves that shade under the influence of wind). They also do not allow for optimisation of the operation of the renewable energy source installation, adapting the parameters of the energy obtained to the requirements of the consumer (for example, the degree of charging of the domestic hot water storage tank) and the installation itself, since the opposing operating parameters are obtained separately, in separate, non-tunable ("rigid") configurations of the energy recovery installation. They also do not ensure that a uniform, flat distribution of the operating temperature is obtained over the entire surface of the absorption plate, especially the photovoltaic plate.

The PL.231006 patent discloses a heat exchanger solution designed for use in hybrid PVT panels, in flat solar collectors and solar under-roof collectors. This exchanger consists of hydraulically and mechanically autonomous, repeatable modules in the form of rigid troughs. In each module/trough, a sleeve made of flexible metal foil and filled with a working fluid is placed. A tubular heat exchanger is placed in such a sleeve. Between the elastic sleeve and the bottom of the trough, there is an elastic band which acts as an expansion vessel and safety element. The flexible film of the sleeve flattens out under the influence of the working fluid pressure in the sleeve over the entire surface contacting the absorption plate, photovoltaic plate or roof sheathing within the trough. A set of such modules significantly increases the level of transfer of thermal energy converted from solar radiation energy to the working fluid in the sleeve.

DE102006021119A1 discloses a heat collector having a collector side serving for heat absorption and a rear side. The rear side has an element for dissipating heat through which liquid flows. It has a connection which guides the fluid flowing through the collector front side to the rear heat supply element. The connection is integrated into the collector and has a valve. In other words, this document discloses a heat collector with a heat exchanger on the upper side, containing classic piping (e.g. meander), integrated with the absorption plate, and on the rear side a separate heat exchanger (water-external air) as a heat dissipation element (for emitting heat), equipped with pipe coils preferably being copper tubes.

DE102011053526A1 discloses the absorber for a solar thermal system, having an absorber sheet and a pipe arrangement that is passed through from a heat transfer medium and connected with the absorber sheet in a heat-conducting manner. Through the pipe arrangement, a heat transport medium can flow and which is thermally conductively connected to the absorber sheet. Another pipe arrangement is passed through from another heat transfer medium. The latter pipe arrangement is also connected with the absorber sheet in the heat conducting manner. Through the latter pipe arrangement, a further heat transport medium can flow. The former pipe arrangement or latter pipe arrangement has a meander-shaped bent pipe with straight pipe sections and pipe bends.

Document JP2001033050 discloses a solar device with air-conditioning function, which is capable of securing hot-water for indoor heating or hot-water supply and capable of effecting indoor cooling. For hot-water supplying, city water (hot-water) heated by a solar panel is guided to a heat insulating tank. For room heating, city water (hot-water) heated by the solar panel is guided to an indoor heat exchanging means. For room cooling, city water (cold water) supplied from a city water supplying port is guided to an indoor heat exchanging means. The solar panel comprises a hot water supply path for guiding water to the heat retaining tank, a heating path for guiding tap water heated by the solar panel to the indoor heat exchange means, or tap water supplied from a tap water supply port by the indoor heat exchange means. The solar device comprises a mode switching unit capable of switching between a cooling path leading to the heat retaining tank via the mode switching unit.

The aim of the invention is to develop a heat exchanger structure for a solar converter, in particular a converter for flat solar collectors, hybrid PVT panels and under-roof solar collectors, with improved electrical and thermal efficiency, enabling the safe charging of a domestic hot water storage tank and seasonal energy storage using the same solar installation. The aim of the invention is also to develop a method for controlling the temperature of this exchanger for greater electrical and thermal efficiency.

According to the invention, a heat exchanger for solar converters, especially hybrid PVT panels and under-roof solar collectors, has a piping, with a solar fluid integrated in an absorption plate or in a photovoltaic plate, or in a roofing sheet, wherein the piping of the heat exchanger is of double-circuit, wherein a first circuit is a heating piping in the form of a meander piping, incorporable in a solar heating circuit of a domestic hot water storage tank, and a second circuit is a cooling piping in the form of at least one loop piping, connectable to a phase energy storage by a solar cooling circuit, wherein the phase energy storage is located in a lower source circuit of a heat pump, wherein an installation of photovoltaic cells in a solar electric circuit is connected to an electrical energy storage tank, the electrical energy storage tank being connected to a drive system of the heat pump by means of an electrical supply circuit, wherein the meander piping and the at least one loop piping are separate and hydraulically independent of each other, and wherein at least a part of the meander piping of the heating circuit and a part of the compensating loops of the loop piping is immersed in a working fluid contained in a flexible sleeve that supports the flow of thermal energy.

Preferably, the entire meander piping of the heating circuit and the entire loop piping of the cooling circuit are located on the same surface, and an input of an input collector and an output of an output collector are located on opposite sides of a collector unit with respect to each other.

It is also preferable if the loop piping of the cooling circuit is placed on the side of open meanders of the meander piping of the heating circuit and compensation loops of the loop piping are located inside the meanders of the meander piping.

In this exchanger, the entire meander piping of the heating circuit and the entire loop piping of the cooling circuit may be in the form of channels, created in the same layer, of a absorption structural plate.

Preferably, the flexible sleeve, with the working fluid, is placed in a rigid trough which is a stand-alone exchanger module, thermally interacting with the absorption plate of the solar collector, the photovoltaic plate of the PVT panel or the roof sheathing.

The essence of a temperature control method for this heat exchanger is that the temperature of a solar fluid is measured at an output of a heating piping of the heat exchanger. If the temperature at the output of the heating piping is higher than the permissible domestic hot water charging temperature, preferably approx. 60°C, the solar fluid flow in a cooling loop piping is opened. The solar fluid contained in said cooling loop piping, derived from a phase energy storage containing solar fluid having a temperature of approx. 0°C (which has a temperature of approx. 2 °C at an input of this loop piping), then cools down the solar fluid in the heating piping to a temperature below the permissible domestic hot water charging temperature of approx. 60°C. However, if the temperature at the output of the heating piping is lower than the lowest permissible domestic hot water charging temperature of approx. 45 °C, but higher than the break-even point temperature of approx. 4 °C, the flow of the solar fluid in the heating piping closes and the flow of the solar fluid in the cooling loop piping opens. Cooling is carried out until the break-even point temperature of 4°C in the exchanger, at an output of the output collector of the loop piping, is reached.

The invention, through the use of a double-circuit heat exchanger in the heat recovery members of solar converters, such as solar collectors, under-roof solar collectors, and especially hybrid PVT photovoltaic panels with heat recovery, and through the cooling, controllable effect of the loop piping, interacting with the seasonal, phase, water-based energy storage of the solar renewable energy source, enables the recovery of almost all solar radiation energy reaching the solar converter under given climatic conditions and with a given level of electronic technology. The solution according to the invention enables the operation of a domestic hot water heating circuit in conditions that do not threaten the installation with explosion and do not expose users to burns due to overheating. On the other hand, through the creation of conditions for the preferable use of larger installations for converting solar energy to thermal energy than the previous use of a minimum number of converters providing domestic hot water during the summer half-year, the heating installation according to the invention with a larger capacity than the standard one also makes it possible to extend the heating period in which with the required charging temperature of the domestic hot water storage tank, especially when sufficient power of the energy source (heating installation) has to be ensured at the extremes of the charging period. The use of the method according to the invention makes it possible to use short charging periods for the domestic hot water storage tank and to extend the periods between successive charges of the domestic hot water storage tank, during which all the thermal energy, converted by the solar energy converter, is charged to the seasonal, phase, water-based energy storage with the purpose of being used during periods of winter energy shortages, including periods when the hot water storage tank cannot be heated "from the roof", but can be supplied by a heat pump with the energy accumulated in the seasonal energy storage. Through the use of the method according to the invention, the seasonal energy storage can also be charged with hitherto harmful excess energy causing overheating of the installation, but above all, through the use of a water-based, phase energy storage with a temperature of 0 °C, guaranteed by the laws of physics, over the entire range of phase transformation, with an extremely large, achievable temperature difference between the temperature of the solar fluid at the output of the cooling installation of the heat exchanger and the temperature of the water in the phase energy storage. It is also possible, through the interaction with the phase storage, to very profitably use thermal energy, which was previously generally useless, contained in the solar fluid in the temperature range from the lower temperature limit of domestic hot water (approx. 40 °C) to the break-even point temperature of approx. 4 °C. The value (also economic) of this energy is several times greater than that of the energy loading the domestic hot water storage tank. Due to the energy interaction (energy and temperature) of the heat exchanger according to the invention with the phase energy storage and due to the temperature properties of the process of phase transformation of water into ice (0 °C), it is not possible for the solar installation to ice up. The fluid stream in the solar circuit is heated in the loop heat exchanger by several to a dozen or so kelvins and directed to the phase energy storage and does not raise the temperature of the water in this storage, but only receives (cools) and accumulates the energy of the heated solar fluid, which makes it possible, on its way back from the phase storage to the loop heat exchanger circuit, to cool with the solar fluid having a constant output temperature of 0 °C and thus guarantees constant cooling conditions. On the other hand, under conditions of solar flow rate control, it enables control of the temperature of the structural plate with which the heat exchanger is integrated. The heat exchanger according to the invention makes it possible not only to obtain the required temperature of the structural plate under dynamically varying conditions of exposure to sunlight and to provide optimum temperature operating conditions for the photovoltaic cells of the hybrid PVT panels mounted on the structural plate (on its opposite side with respect to the heat exchanger), but, through the use of compensating loops in the loop heat exchanger, it makes it possible to equalise the cooling effect on the structural plate and to ensure a uniform temperature in the band of its effect along the direction of the solar stream flow in the compensating loop. By arranging the compensating loops in successive open meanders of the meander exchanger, the entire back surface of the flat solar converter can be covered. On the other hand, due to the input and output of the solar circuit to and from the exchanger on opposite sides of the collector unit of the loop exchanger, it ensures equalisation of flow resistance of solar streams in the entire loop exchanger installation, thus achieving uniformity of temperature distribution on the surface of the structural plate along the orientation of the collector unit. Due to the joint compensating action of the compensating loops and the equalisation of flow resistance of the solar streams in the loop heat exchanger, a flat temperature distribution of a preset value over the entire surface of the structural plate is achieved during long periods between the priority short charging of the domestic hot water storage tank. Due to the possibility of obtaining a lowered (also below nominal temperature) and uniform temperature of the structural plate and its effect on the photovoltaic cells deposited on it, the operating temperature of these cells is lowered and their electrical efficiency is increased, which is particularly important during periods of highest exposure to sunlight. The use of the heat exchanger according to the invention, integrated into the absorption structural plate of a solar energy converter, makes it possible to extend the functionality of existing meander exchanger structures of solar collectors and hybrid PVT panels. The implementation of the exchanger in the form of autonomous sleeve modules makes it possible to intensify energy transport and "smoothen" the temperature distribution over the entire surface of the absorption plate or to achieve preset, dynamically variable temperature distributions. On the other hand, the implementation of the exchanger in the form of channels created inside the composite metal-glass structural plate makes it possible to better integrate the solar converter modules and makes it possible to increase the efficiency of the effect on the photovoltaic cells, especially in the conditions of their direct deposition on the metal substrate of the structural plate. Due to the absolute stabilisation of the water temperature in the phase energy storage in the state of phase transformation of water into ice (0°C), (independent of external factors and with negligibly small variable increases of this temperature on the way from the phase energy storage to the heat exchanger), photovoltaic cells operate in a very stable temperature range and do not overheat. This results in a significant increase in the lifespan of the entire structure and, in particular, prevents destruction of the silicon wafers of the photovoltaic cells. The use of a metal support plate also counteracts the destructive effects of prolonged (decades) exposure to UV radiation, extreme ranges of varying temperature and humidity, compared to the materials used today. The proposed method for controlling the temperature and the structure of the heat exchanger according to the invention makes it possible to achieve full self-sufficiency in heating (and cooling) of objects, such as a single-family house, throughout the year and to compensate for the temperature coefficient of materials from which the photovoltaic cells are made, thus increasing the electrical efficiency of the hybrid PVT panel above its nominal efficiency and significantly reducing costs. The use of solutions according to the invention makes it possible to achieve full energy independence of users of single-family and multi-family houses and similar objects, allows to relieve the electric transmission network without the need to create costly district heating networks on the principle "produced here, consumed here". Thermal energy is produced with respect for the environment, without exposing users to unnecessary costs of ever-increasing energy.

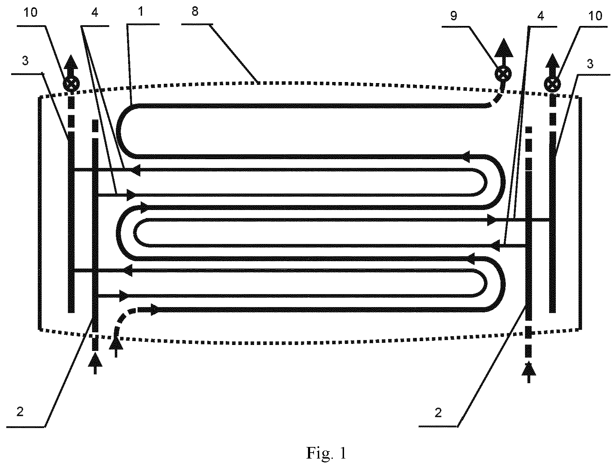

The invention will be explained in more detail using the embodiment shown in the drawings. Fig. 1 of the drawings shows a double-circuit piping of the exchanger, Fig. 2 shows an exchanger piping located in an autonomous module, and Fig. 3 shows a diagram of an installation for a detached house with the use of a PVT photovoltaic panel using the heat exchanger according to the invention. Moreover, the application of the solution according to the invention in the structural plate of a solar converter will be explained.

The heat exchanger according to the invention is intended for flat solar converters of renewable energy sources that convert solar radiation energy into thermal energy or electrical energy and especially for hybrid PVT panels and under-roof solar collectors.

An example of a hybrid PVT panel heat exchanger according to the invention is used in a hybrid photovoltaic installation with heat recovery. This exchanger has a double-circuit piping, in the form of suitably curved tubes with a diameter of 8 mm, the first circuit being a meander piping 1 and a heating piping, while the second circuit being a loop piping 2, 3, 4 and a cooling piping. The cooling piping consists of an input collector 2, an output collector 3, and compensating loops 4. The piping of the first and second circuit heat exchanger is integrated into a metal absorption structural plate 8 with high mechanical strength, especially resistance to wind pressure (above 2400 Pa under static conditions) and with sufficiently good thermal conductivity (above 130 W/mK), in the embodiment a duralumin plate. Inside the piping, there is a typical solar fluid. The heat exchanger is placed under the structural plate 8, and a panel of 72 photovoltaic cells is placed on top of this plate. At the output of the meander piping 1 of the heating circuit of the heat exchanger, there is a meander temperature sensor 9.

An exemplary heat exchanger has two loop cooling pipings, located on both sides of the meander 1 heating piping, and each loop piping consists of an input collector 2, an output collector 3 with a loop temperature sensor 10 at its output and of 15 compensating loops 4. The loop pipings are arranged on the open meander side of the meander piping so that the compensating loops 4 enter the open meanders without crossing the meander piping and other loop piping components.

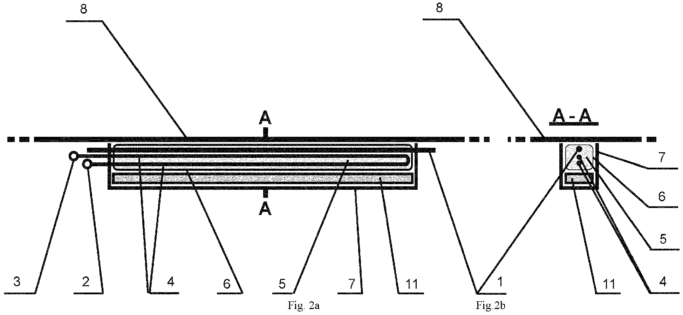

In the second embodiment, the exchanger piping is designed to consists of one compensating loop 4 and a half of the meander piping 1 which are arranged in individual autonomous fifteen modules for each photovoltaic panel. Fig. 2a shows a longitudinal section of a single module, and Fig. 2b shows a cross-section of this module. Each module consists of a rigid trough 7, a flexible sleeve 6 filled with a working fluid 5, in which a half of the meander in the form of one pipe of the meander piping and one compensating loop 4 are placed. The working fluid 5 fills the flexible sleeve 6 in such a volume that the structural plate 8 applied on the trough from above adheres to it as much as possible over its entire surface. (The rigid trough is "covered" by the structural plate 8 to which it is pressed, and the flexible sleeve 6 is flattened against the surface of the structural plate 8). Between the elastic sleeve 6 and the bottom of the rigid trough 7, an elastic band 11 is placed, into which the elastic sleeve 6 is pressed to an extent proportional to the thrust of the working fluid 5. This band, under given temperature conditions, flexes under the influence of the increasing thrust force of the working fluid 5 in the flexible sleeve 6, and thus ensures a stable pressure of the working fluid 5 and protects the sleeve 6 from possible damage.

In the third embodiment of the heat exchanger, the piping counterparts channelising solar streams of the meander piping and the compensating loops 4 of the loop piping 2, 3, 4 are made in the composite structural plate 8 as channels. These channels are located in one part of the metal plate 8 and are covered by another part of this plate which is of metal but can also be of glass. However, the channel inputs and outputs that are connected to the input collector 2 and the output collector 3 are routed backwards beyond the back plane of the plate 8. The input collector 2 and the output collector 3 of the loop piping 2, 3, 4 are thus located outside the structural plate 8 on the opposite side thereof with respect to the back plane of the plate on which photovoltaic cells 16 are deposited. The plate 8 is integrated on one side with photovoltaic cells (preferably deposited directly thereon or alternatively glued as so-called "laminates"), and on the other side (from behind) with a thermally insulating composite structural plate.

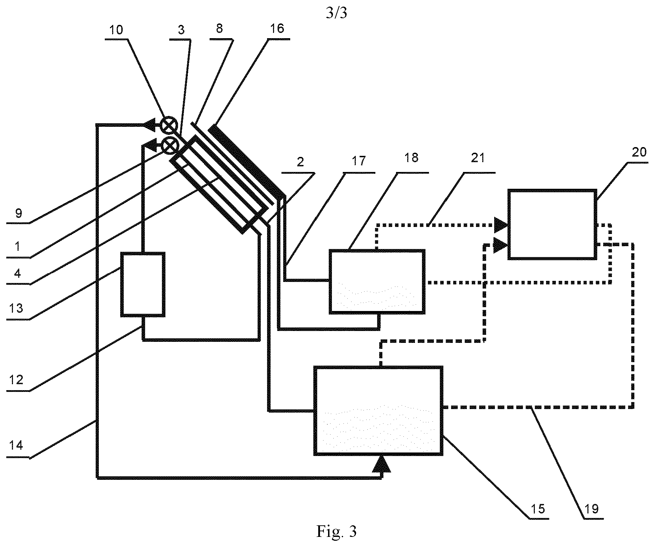

An exemplary method for controlling the temperature of the heat exchanger according to the invention is illustrated in Fig. 3 of the drawing. This method was used in a solar renewable energy installation based on a hybrid PVT photovoltaic panel with heat recovery located on the roof and façade of a detached house having a surface of 120 m². In this installation, the meander piping 1 of the heat exchanger is incorporable in a solar heating circuit 12 of a domestic hot water storage tank13, and the loop piping 2, 3, 4 is connectable to a phase energy storage 15 by means of a solar cooling circuit 14. The installation of photovoltaic cells 16 in a solar electric circuit 17 is connected to an electrical energy storage tank 18. On the other hand, the phase energy storage 15 is located in a lower source circuit 19 of a heat pump 20 and the electrical energy storage tank 18 is connected to a drive system of the heat pump 20 by means of an electrical supply circuit 21.

According to the method, under conditions of priority charging of the domestic hot water storage tank 13, firstly the temperature of the solar fluid at the output of the heating piping 1 of the heat exchanger is measured by means of the meander temperature sensor 9. If the temperature at the output of the heating piping is higher than the permissible domestic hot water charging temperature, approx. 60 °C (which occurs during periods of high exposure to sunlight), the solar fluid flow is opened at the input of the collector 2 of the cooling piping 2, 3, 4 and with the solar fluid, the temperature of which at the input of this collector is approx. 2 °C, the solar fluid in the heating pipe is cooled via the structural plate 8 (or the working fluid 5 in the flexible sleeve 6) to a temperature not higher than the permissible temperature for charging the domestic hot water storage tank 13, i.e. 60 °C, but not lower than the minimum permissible temperature for charging the domestic hot water storage tank, i.e. 45 °C, and the cooled solar fluid is charged to the domestic hot water storage tank until it is fully charged. On the other hand, when the temperature at the output of the heating meander piping is lower than the lowest permissible domestic hot water charging temperature of approx. 45 °C, but higher than the break-even point temperature of approx. 4 °C, as measured by the loop temperature sensor 10 at the output of the output collector 3 of the cooling loop piping 2, 3, 4 (which occurs during periods of insufficient or no exposure to sunlight), the solar fluid flow in the heating piping is closed and the solar fluid flow in the cooling piping is opened. Cooling is carried out by transporting the low-temperature thermal energy of the heated structural plate 8 by means of the solar cooling circuit 14 from the heat exchanger to the phase energy storage 15 in the form of a tank containing approx. 30 tonnes of water having a liquid water temperature of 0 °C. Cooling is carried out until the temperature at the output of the output collector 3 is lowered to the break-even point temperature, i.e. 4 °C. In the periods between recharging the domestic hot water storage tank 13 with thermal energy generated by balancing the thermal energy from solar radiation under given conditions, a cooling effect with a cooling stream of approx. 2 °C takes place on the material from which the photovoltaic cells are made, which are deposited on the structural plate 8. Then, the temperature coefficient of most types of materials from which the cells are made is effectively compensated and their efficiency increases. The conditions affecting the balance of thermal energy include the heating effect of absorbed energy from solar radiation, the effect of energy of heated conductive paths that transport electrical energy from the photovoltaic cells 16, the effect of the environment (including, but not limited to, the energy of condensation of water vapour from the air (phase transition) below the dew point temperature of the solar converter, the effect of wind, rain energy and the effect by thermal conduction of energy contained in the surrounding air of varying temperature etc.), and in particular the effect of the cooling loop piping 2, 3, 4 of the heat exchanger according to the invention. The operation of the solar renewable energy source equipped with the exchanger according to the invention results in the generation of a maximum value of electrical energy by the photovoltaic cells 16, by ensuring a temperature range suitable for a given photovoltaic cell material and allows operation at temperatures below the dew point temperature. This is possible because the balance of energies affecting the operating temperature of such a cell material is carried out in a controlled manner, by adjusting the amount of cooling stream in the solar cooling circuit 14 on the basis of indications of the loop temperature sensor 10. The electrical energy generated by the photovoltaic cells 16 is directed by means of the solar electric circuit 17 to a daily storage 18, from which, for example, an electric car is recharged and, after conversion to alternating current by means of an inverter, is used for the ongoing supply of domestic appliances and the heat pump. Excess energy on a prosumer basis can be transmitted to the national electricity grid.

## Claims

1. A heat exchanger for solar converters, especially hybrid PVT panels and under-roof solar collectors, having a piping, with a solar fluid integrated in an absorption plate or in a photovoltaic plate, or in a roofing sheet, wherein the piping of the heat exchanger is of double-circuit, wherein a first circuit is a heating piping in the form of a meander piping (1), incorporable in a solar heating circuit (12) of a domestic hot water storage tank (13), and a second circuit is a cooling piping in the form of at least one loop piping (2,3,4), connectable to a phase energy storage (15) by a solar cooling circuit (14), wherein the phase energy storage (15) is located in a lower source circuit (19) of a heat pump (20), wherein an installation of photovoltaic cells (16) in a solar electric circuit (17) is connected to an electrical energy storage tank (18), the electrical energy storage tank (18) being connected to a drive system of the heat pump (20) by means of an electrical supply circuit (21), wherein the meander piping (1) and the at least one loop piping (2,3,4) are separate and hydraulically independent of each other, and wherein at least a part of the meander piping (1) of the heating circuit and a part of the compensating loops of the loop piping (2,3,4) is immersed in a working fluid (5) contained in a flexible sleeve (6) that supports the flow of thermal energy.

2. The heat exchanger according to claim 1, **characterised in that** the entire meander piping (1) of the heating circuit and the entire loop piping (2,3,4) of the cooling circuit are located on the same surface, wherein the loop piping (2,3,4) of the cooling circuit is placed on the open meander side of the meander piping (1) of the heating circuit, and compensating loops (4) of the loop piping (2,3,4) are located inside the meanders of the meander piping (1).

3. The heat exchanger according to claim 1, **characterised in that** the entire meander piping (1) of the heating circuit and the entire loop piping (2,3,4) of the cooling circuit are made in the form of channels created in the same absorption layer of a structural plate (8).

4. The heat exchanger according to claim 1, **characterised in that** an input of an input collector (2) and an output of an output collector (3) of the loop piping (2,3,4) are located on opposite sides of a collector unit (2, 3) with respect to each other.

5. The heat exchanger according to claim 1, **characterised in that** the flexible sleeve (6), with the working fluid (5), is placed in a rigid trough (7) constituting an autonomous module of the exchanger, thermally interacting with a solar collector plate, a PVT panel photovoltaic plate or a roof sheathing.

6. A method for controlling the temperature of the exchanger according to any of the claims from 1 to 5, wherein the temperature of a solar fluid at an output of a meander piping (1) of the heat exchanger is measured, and if the temperature at the output of the meander piping (1) is higher than the domestic hot water charging temperature of the water storage tank (13) of the solar heating circuit (12) of approx. 60 °C, the solar fluid flow is opened in a cooling loop piping (2,3,4) and with the solar fluid contained in said cooling loop piping (2,3,4), derived from the phase energy storage (15) containing solar fluid having a temperature of approx. 0°C, the solar fluid in the meander piping (1) is cooled down to a temperature not higher than the domestic hot water charging temperature of approx. 60°C, but not lower than 45°C, the minimum temperature for charging the domestic hot water storage tank (13), and when the temperature at the output of the meander piping (1) is lower than the lowest domestic hot water charging temperature of approx. 45 °C, but is higher than the temperature of approx. 4 °C, measured at an output of an output collector (3) of the cooling loop piping (2,3,4), the solar fluid flow in the meander piping (1) is closed and the solar fluid flow in the cooling loop piping (2,3,4) is opened until the temperature in the heat exchanger, at an output of the output collector (3) of the cooling loop piping (2,3,4), falls to the temperature of 4°C.

## Patentansprüche

1. Wärmetauscher für Solarwandler, insbesondere für Hybrid-PVT-Module und Unterdach-Solarkollektoren, mit einer Verrohrung mit einer Solarflüssigkeit, die in eine Absorptionsplatte oder in eine Photovoltaikplatte oder in eine Dachbahn integriert ist, wobei die Verrohrung des Wärmetauschers zweikreisig ausgelegt ist, wobei ein erster Kreis eine Heizverrohrung in Form einer Mäanderverrohrung (1) ist, die in einen Solarheizkreis (12) eines Warmwasserspeichers (13) integrierbar ist, und ein zweiter Kreis eine Kühlverrohrung in Form von mindestens einer Schleifenverrohrung (2, 3, 4) ist, die über einen Solarkühlkreis (14) an einen Phasenenergiespeicher (15) anschließbar ist, wobei sich der Phasenenergiespeicher (15) in einem unteren Quellkreis (19) einer Wärmepumpe (20) befindet, wobei eine Anlage aus Photovoltaikzellen (16) in einem Solarstromkreis (17) an einen elektrischen Energiespeicher (18) angeschlossen ist, wobei der elektrische Energiespeicher (18) über einen Stromversorgungskreis (21) an ein Antriebssystem der Wärmepumpe (20) angeschlossen ist, wobei die Mäanderverrohrung (1) und die mindestens eine Schleifenverrohrung (2, 3, 4) voneinander getrennt und hydraulisch unabhängig sind, und wobei mindestens ein Teil der Mäanderverrohrung (1) des Heizkreises und ein Teil der Kompensationsschleifen der Schleifenverrohrung (2, 3, 4) in eine Arbeitsflüssigkeit (5) eingetaucht sind, die in einer flexiblen Hülle (6) enthalten ist, welche den Wärmeenergiefluss unterstützt.

2. Wärmetauscher nach Anspruch 1, **dadurch gekennzeichnet, dass** sich die gesamte Mäanderverrohrung (1) des Heizkreises und die gesamte Schleifenverrohrung (2, 3, 4) des Kühlkreises auf derselben Oberfläche befinden, wobei die Schleifenverrohrung (2, 3, 4) des Kühlkreises auf der offenen Mäanderseite der Mäanderverrohrung (1) des Heizkreises angeordnet ist und sich Kompensationsschleifen (4) der Schleifenverrohrung (2, 3, 4) im Inneren der Mäander der Mäanderverrohrung (1) befinden.

3. Wärmetauscher nach Anspruch 1, **dadurch gekennzeichnet, dass** die gesamte Mäanderverrohrung (1) des Heizkreises und die gesamte Schleifenverrohrung (2, 3, 4) des Kühlkreises in Form von Kanälen ausgebildet sind, die in derselben Absorptionsschicht einer Strukturplatte (8) angelegt sind.

4. Wärmetauscher nach Anspruch 1, **dadurch gekennzeichnet, dass** sich ein Einlass eines Einlasskollektors (2) und ein Auslass eines Auslasskollektors (3) der Schleifenverrohrung (2, 3, 4) auf gegenüberliegenden Seiten einer Kollektoreinheit (2, 3) zueinander befinden.

5. Wärmetauscher nach Anspruch 1, **dadurch gekennzeichnet, dass** die flexible Hülle (6) mit der Arbeitsflüssigkeit (5) in einer starren Wanne (7) angeordnet ist, die ein eigenständiges Modul des Tauschers bildet, das thermisch mit einer Solarkollektorplatte, einer photovoltaischen Platte eines PVT-Moduls oder einer Dachverschalung in Wechselwirkung steht.

6. Verfahren zur Regelung der Temperatur des Wärmetauschers nach irgendeinem der Ansprüche 1 bis 5, wobei die Temperatur einer Solarflüssigkeit an einem Auslass einer Mäanderverrohrung (1) des Wärmetauschers gemessen wird, und wenn die Temperatur am Auslass der Mäanderverrohrung (1) höher als die Warmwasser-Einspeisetemperatur des Wasserspeichers (13) des Solarheizkreises (12) von ca. 60 °C ist, der Solarflüssigkeitsstrom in einer Kühlschleifenverrohrung (2, 3, 4) geöffnet wird und mit der in dieser Kühlschleifenverrohrung (2, 3, 4) enthaltenen Solarflüssigkeit, die aus dem Phasenenergiespeicher (15) stammt, welcher Solarflüssigkeit mit einer Temperatur von ca. 0 °C enthält, die Solarflüssigkeit in der Mäanderverrohrung (1) auf eine Temperatur abgekühlt wird, die nicht höher ist als die Warmwasser-Einspeisetemperatur von ca. 60 °C, jedoch nicht niedriger als 45 °C, der Mindesttemperatur zur Einspeisung in den Warmwasserspeicher (13), und wenn die Temperatur am Auslass der Mäanderverrohrung (1) niedriger ist als die niedrigste Warmwasser-Einspeisetemperatur von ca. 45 °C, jedoch höher ist als die Temperatur von ca. 4 °C, gemessen am Auslass eines Auslasskollektors (3) der Kühlschleifenverrohrung (2, 3, 4), der Solarflüssigkeitsstrom in der Mäanderverrohrung (1) geschlossen wird und der Solarflüssigkeitsstrom in der Kühlschleifenverrohrung (2, 3, 4) geöffnet wird, bis die Temperatur im Wärmetauscher an einem Auslass des Auslasskollektors (3) der Kühlschleifenverrohrung (2, 3, 4) auf die Temperatur von 4 °C absinkt.

## Revendications

1. Un échangeur de chaleur pour convertisseurs solaires, en particulier pour les panneaux PVT hybrides et les capteurs solaires sous toiture, comportant une tuyauterie, avec un fluide solaire intégré dans une plaque d'absorption ou dans une plaque photovoltaïque, ou dans une plaque de toiture, dans lequel la tuyauterie de l'échangeur de chaleur est à double circuit, dans lequel un premier circuit est une tuyauterie de chauffage sous la forme d'une tuyauterie en méandres (1), intégrable dans un circuit de chauffage solaire (12) d'un réservoir de stockage d'eau chaude sanitaire (13), et un deuxième circuit est une tuyauterie de refroidissement sous la forme d'au moins une tuyauterie en boucle (2, 3, 4), raccordable à un stockage d'énergie en phase (15) par l'intermédiaire d'un circuit de refroidissement solaire (14), dans lequel le stockage d'énergie en phase (15) est situé dans un circuit source inférieur (19) d'une pompe à chaleur (20), dans lequel une installation de cellules photovoltaïques (16) dans un circuit électrique solaire (17) est raccordée à un réservoir de stockage d'énergie électrique (18), le réservoir de stockage d'énergie électrique (18) étant relié à un système d'entraînement de la pompe à chaleur (20) au moyen d'un circuit d'alimentation électrique (21), dans lequel la tuyauterie en méandres (1) et au moins une tuyauterie en boucle (2, 3, 4) sont séparées et hydrauliquement indépendantes l'une de l'autre, et dans lequel au moins une partie de la tuyauterie en méandres (1) du circuit de chauffage et une partie des boucles de compensation de la tuyauterie en boucle (2, 3, 4) est immergée dans un fluide de travail (5) contenu dans une gaine flexible (6) qui assure le transfert de l'énergie thermique.

2. L'échangeur de chaleur selon la revendication 1, **caractérisé en ce que** l'ensemble de la tuyauterie en méandres (1) du circuit de chauffage et l'ensemble de la tuyauterie en boucle (2, 3, 4) du circuit de refroidissement sont situés sur une même surface, la tuyauterie en boucle (2, 3, 4) du circuit de refroidissement est disposée du côté ouvert des méandres de la tuyauterie en méandres (1) du circuit de chauffage, et des boucles de compensation (4) de la tuyauterie en boucles (2, 3, 4) sont situées à l'intérieur des méandres de la tuyauterie en méandres (1).

3. L'échangeur de chaleur selon la revendication 1, **caractérisé en ce que** l'ensemble de la tuyauterie en méandres (1) du circuit de chauffage et l'ensemble de la tuyauterie en boucle (2, 3, 4) du circuit de refroidissement sont réalisés sous la forme de canaux créés dans la même couche d'absorption d'une plaque structurelle (8).

4. L'échangeur de chaleur selon la revendication 1, **caractérisé en ce qu'**une entrée d'un collecteur d'entrée (2) et une sortie d'un collecteur de sortie (3) de la tuyauterie en boucle (2, 3, 4) sont situées sur des côtés opposés d'une unité de collecteurs (2, 3) l'une par rapport à l'autre.

5. L'échangeur de chaleur selon la revendication 1, **caractérisé en ce que** la gaine flexible (6), avec le fluide de travail (5), est placée dans une cuvette rigide (7) constituant un module autonome de l'échangeur, en interaction thermique avec une plaque de collecteur solaire, un panneau photovoltaïque PVT ou un revêtement de toiture.

6. Un procédé pour contrôler la température de l'échangeur selon l'une quelconque des revendications 1 à 5, dans lequel on mesure la température d'un fluide solaire à la sortie d'une tuyauterie en méandres (1) de l'échangeur de chaleur et si la température à la sortie de la tuyauterie en méandres (1) est supérieure à la température de chargement de l'eau chaude sanitaire du réservoir de stockage (13) du circuit de chauffage solaire (12), qui est d'environ 60 °C, le flux du fluide solaire est ouvert dans une tuyauterie en boucle de refroidissement (2, 3, 4) et avec le fluide solaire contenu dans ladite tuyauterie en boucle de refroidissement (2, 3, 4), provenant du stockage d'énergie en phase (15) contenant du fluide solaire à une température d'environ 0 °C, le fluide solaire dans la tuyauterie en méandres (1) est refroidi jusqu'à une température qui n'est pas supérieure à la température de chargement d'eau chaude sanitaire d'environ 60 °C, mais qui n'est pas inférieure à 45 °C, température minimale pour le chargement du réservoir de stockage d'eau chaude sanitaire (13), et lorsque la température à la sortie de la tuyauterie en méandres (1) est inférieure à la température minimale de chargement d'eau chaude sanitaire, qui est d'environ 45 °C, mais supérieure à la température d'environ 4 °C mesurée à la sortie d'un collecteur de sortie (3) de la tuyauterie en boucle de refroidissement (2, 3, 4), le flux de fluide solaire dans la tuyauterie en méandres (1) est fermé et le flux de fluide solaire dans la tuyauterie en boucle de refroidissement (2, 3, 4) est ouvert jusqu'à ce que la température dans l'échangeur de chaleur, à la sortie du collecteur de sortie (3) de la tuyauterie en boucle de refroidissement (2, 3, 4), descende à 4 °C.
